# EUROPÄISCHE PATENTSCHRIFT

(11) **EP 0 286 951 B1**
(45) Veröffentlichungstag und Bekanntmachung des Hinweises auf die Patenterteilung: **04.08.1993**
(21) Anmeldenummer: 88105425.8
(22) Anmeldetag: 06.04.1988
(51) Int. Cl.: H02H 7/125, H02H 3/50

(54) **Schaltungsanordnung zur Überwachung eines Mehrpuls-Stromrichters**
Monitoring circuit for polyphase convertor
Circuit de surveillance d'un convertisseur polyphasé

(30) Priorität: 11.04.1987 DE 3712313
(43) Veröffentlichungstag der Anmeldung: 19.10.1988
(73) Patentinhaber: Alcatel SEL Aktiengesellschaft, D-70435 Stuttgart (DE)
(72) Erfinder: Petzold, Dieter, D-8500 Nürnberg (DE); Blasko, Antal, D-8510 Fürth (DE); Frank, Michael, D-8500 Nürnberg (DE); Faltermeier, Josef, D-8411 Brennberg (DE)
(74) Vertreter: Pechhold, Eberhard, Dipl.-Phys.

(56) Entgegenhaltungen:
- EP-A- 0 170 882
- GB-A- 1 587 652
- GB-A- 2 073 514
- US-A- 4 380 045
- US-A- 4 475 150

## Beschreibung

Die Erfindung betrifft eine Schaltungsanordnung gemäß dem Oberbegriff des Patentanspruchs 1.

In thyristorgesteuerten Stromrichtern ist es wichtig, die einwandfreie Funktion der einzelnen Thyristoren zu überwachen. Während ein Kurzschluß eines Thyristors in jedem Falle eine Sicherung auslöst und dadurch leicht erkannt werden kann, ist der Fall, daß ein Thyristor nicht zündet - z.B. weil die Ansteuerung versagt - nicht so einfach zu erkennen, da die Ausgangsspannung des Stromrichters meist nachgeregelt wird und das Gerät funktionsfähig bleibt. Dennoch müssen solche Ausfälle erkannt werden, da sie bei voller Auslastung des Stromrichters zur überlastung der verbleibenden, intakten Bauelemente und zu Abweichungen der Ausgangsspannung vom Sollwert führen können.

Aus der US-A-4,380,045 ist eine Schaltung zur Fehlererkennung in Stromrichtern mit mehreren Thyristoren bekannt. Diese stellt das Nichtdurchschalten eines Thyristors fest, indem sie einen infolge eines Nichtdurchschaltens auftretenden Netzfrequenzanteil im Ausgangsgleichstrom des Stromrichters erkennt und auswertet. Diese Schaltung überwacht nicht das Durchschalten aller Thyristoren und ist nicht in der Lage, den gleichzeitigen Ausfall mehrerer Thyristoren sicher zu erkennen.

In der GB-A-2 073 514 ist eine Schaltungsanordnung offenbart, die die Welligkeit einer gleichgerichteten Spannung überwacht. Es wird der einer Gleichspannung überlagerte Wechselspannungsanteil als Pegelwert ermittelt und bewertet um sicher zu sein, daß einerseits die Gleichrichterschaltung einwandfrei arbeitet, andererseits Einrichtungen, die mit der gleichgerichteten Spannung betrieben werden, nicht infolge zu hoher Welligkeit fehlerhaft arbeiten.

Aus der EP 170 882 A 1 ist es bekannt, einzelne Thyristoren dadurch zu überwachen, daß parallel zu jedem Thyristor ein Bedämpfungswiderstand in Reihe mit einem Bedämpfungskondensator geschaltet und der Strom durch den so geschaffenen Parallelzweig über eine Leuchtdiode geführt wird. Das von der Leuchtdiode gelieferte Lichtsignal wird mittels eines Lichtwellenleiters einer Auswerteschaltung zugeführt.

Diese Art der Überwachung ist sehr aufwendig, da jeder einzelne Thyristor mit den erforderlichen Bauelementen beschaltet werden muß. Die Anordnung von Lichtwellenleitern und deren Ankopplung an die Leuchtdioden stellen zudem Punkte hoher Störungsanfälligkeit dar.

Der Erfindung liegt die Aufgabe zugrunde, eine Schaltungsanordnung der im Oberbegriff des Patentanspruchs1 beschriebenen Art anzugeben, die eine einfachere Überwachung der Funktion der einzelnen Thyristoren ermöglicht und die weitgehend störungssicher arbeitet.

Diese Aufgabe wird durch die im kennzeichnenden Teil des Patentanspruchs 1 angegebenen Merkmale gelöst.

Hier wird durch eine Analyse der Welligkeit der ungeglätteten Ausgangsspannung eine Überwachung mehrerer oder auch aller Thyristoren mittels einer einzigen Einrichtung ermöglicht.

Eine Ausgestaltung der erfindungsgemäßen Schaltungsanordnung ist im Patentanspruch 2 beschrieben und gibt eine einfache Schaltung zur Welligkeitsüberwachung wieder.

Diese Welligkeitsüberwachungsschaltung ist im Unteranspruch 3 so ausgestaltet, daß sporadische Ausfälle einzelner Thyristor-Schaltphasen toleriert werden können und nicht zur Abgabe einer Störungsmeldung und zur Abschaltung des gesamten Stromrichters führen.

Gegenstand des Anspruchs 4 ist eine Ausgestaltung der Schaltungsanordnung nach der Erfindung, die es gestattet, die Abschaltung des Mehrpuls-Stromrichters aufgrund von Thyristor-Schaltphasenausfällen auszusetzen, wenn die Ausgangsbelastung sehr niedrig ist und daher einerseits eine sichere Welligkeitsüberwachung erschwert ist und andererseits die Gefahr, daß durch einen Ausfall eines Thyristors die verbleibenden, in Betrieb befindlichen Thyristoren überlastet sino und Schaden nehmen, nicht besteht.

In Anspruch 5 ist eine Möglichkeit wiedergegeben, eine Abschaltung aufgrund der Welligkeitsüberwachung unmittelbar nach Einschalten des Stromrichters so lange auszusetzen, bis alle Filter eingeschwungen sind und alle Zeitglieder definierte Zustände eingenommen haben.

Gegenstand des Anspruchs 6 ist eine Welligkeitsüberwachungsschaltung, deren Eingangsteil aus mehreren gleichartigen parallelen Zweigen besteht. Mit dieser Schaltung lassen sich die Thyristoren von Mehrpuls-Stromrichtern mit in Gruppen zusammengeschalteten Pulsstromquellen gruppenweise überwachen, so daß eine Aussage darüber, in welcher Gruppe ein Thyristor fehlerhaft arbeitet, möglich ist.

In Anspruch 7, schließlich, ist eine Wellligkeitsüberwachungsschaltung beansprucht, die zur Welligkeitsanalyse einen Rechner verwendet.

Anhand einer Figur soll nachfolgend ein Ausführungsbeispiel der Schaltungsanordnung nach der Erfindung beschrieben und seine Funktion erklärt werden.

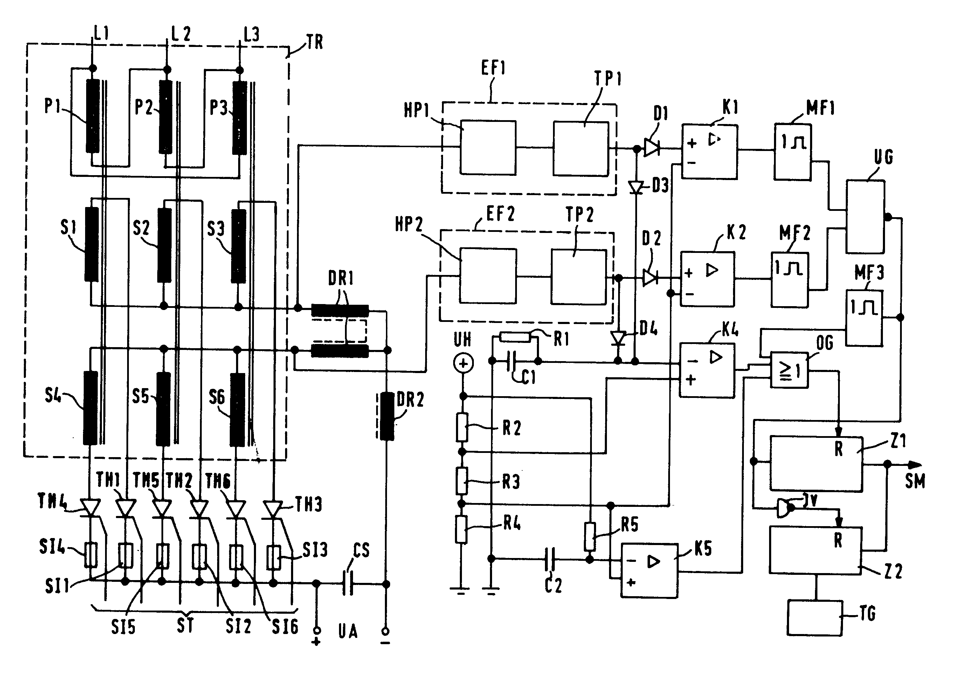

In der Figur ist schematisch ein Transformator TR mit den Primärwicklungen P1 ... P3 und den Sekundärwicklungen S1 ... S6 dargestellt. Werden die Primärwicklungen, wie dargestellt, aus einem Drehstromnetz mit den Phasen L1 ... L3 gespeist, so steht an den Sekundärwicklungen S1, S2, S3 die Sekundärspannung mit jeweils 120° Phasenverschiebung an. Zu den an den Sekundärwicklungen S1 ... S3 anstehenden Spannungen um 180° phasenverschoben sind die Spannungen an den Sekundärwcklungen S4 ... S6, da letztere gegensinnig zu den Wicklungen S1 ... S3 beansprucht werden. Die Wicklungen S1 ... S3 und S4 ... S6 sind jeweils einseitig zu einem Sternpunkt zusammengeführt. Die beiden Sternpunkte sind über zwei miteinander induktiv gekoppelte Wicklungen einer ersten Siebdrossel DR1 miteinander verbunden. Der Verbindungspunkt ist über eine zweite Siebdrossel DR2 an eine Ausgangsklemme -UA des Stromrichters geführt. Letztere ist mit der negativen Seite eines Siebkondensators CS verbunden und bildet den negativen Pol des Stromrichter-Ausgangs. Die nicht zu den Sternpunkten geführten Anschlüsse der Sekundärwicklungen sind über die Schaltstrecken von Thyristoren TH1 ... TH6 und über Sicherungen SI1 ... SI6 parallel auf eine Sammelschiene geführt, die mit der positiven Seite des Siebkondensators CS verbunden ist und den positiven Pohl +UA des Stromrichter-Ausgangs bildet.

Die Ansteuerung der Thyristoren erfolgt durch eine nicht dargestellte Zündschaltung, welche die zur Durchschaltung der einzelnen Thyristoren erforderlichen Zündimpulse zu den richtigen Zeitpunkten über Steuerleitungen ST an die Steuerelektroden der Thyristoren liefert.

Die in der Figur dargestellte, zweikanalig ausgebildete Welligkeitsüberwachungsschaltung besteht pro Kanal aus einem Eingangsfilter EF1, EF2, das ein Hochpaßfilter HP1, HP2 mit Spannungsbegrenzer und ein nachgeschaltetes Tiefpaßfilter TP1, TP2 enthält, einer durch eine Diode D1, D2 gebildeten Einweg-Gleichrichterstufe, und einem Komparator K1, K2 mit nachgeschaltetem nachtriggerbaren Zeitglied MF1, MF2. Die Ausgänge der Zeitglieder der beiden Kanäle sind auf ein Nand-Glied UG geführt, dem ein Zähler Z1 nachgeschaltet st. Am Ausgang des Zählers Z1 erscheinende, eine Störung anzeigende Signale werden über eine Leitung SM in der Figur nicht dargestellten Einrichtungen zugeführt, die einen Alarm auslösen und gegebenenfalls den Stromrichter oder Teile desselben abschalten.

Die Eingangssignale in die beiden Kanäle der Welligkeitsüberwachungsschaltung werden in der dargestellten Schaltung an den Sternpunkten der Wicklungsgruppen S1 ... S3 und S4 ... S6 abgegriffen. Jedes der Signale hat bei Betreb des Stromrichters an einem 50 Hz-Drehstromnetz eine Frequenz von 150 Hz und eine von der Belastung des Stromrichterausganges und von der Reaktanz der Drosseln DR1 und DR2 abhängige Spannung.

Bei einkanaliger Überwachung müßte ein Eingangssignal am Verbindungspunkt der Wicklungen der Drossel DR1 mit der Wicklung der Siebdrossel DR2 abgegriffen werden. Dieses hätte, da es von den gegeneinander um 60° phasenverschobenen Strompulsen aus insgesamt sechs Sekundärwicklungen hervorgerufen wird, eine Frequenz von 300 Hz und eine dem Spannungsabfall an der Siebdrossel DR2 entsprechende Spannung.

In der dargestellten Schaltung geschieht die Verarbeitung eines Eingangssignals wie folgt: Das am Sternpunkt dreier Wicklungen, z.B. der Wicklungen S1 ... S3 abgegriffene Signal wird dem Hochpaß HP1 des Eingangsfilters EF1 zugeführt. Dies geschieht zweckmäßig über eine kapazitive Ankopplung, so daß eine Potentialtrennung zwischen Sternpunkt und Welligkeitsüberwachungsschaltung besteht. Der Hochpaß HP1 trennt das Welligkeitssignal vom unterlagerten Gleichspannungsniveau und von eventuell vorhandenen 50 Hz-Netzfrequenzsignalen. Eine nicht gesondert dargestellte Spannungsbegrenzung sorgt für weitgehende Unabhängigkeit des zu verarbeitenden Welligkeitssignals von der Belastung des Stromrichters. Der nachgeschaltete Tiefpaß TP1 läßt aus dem nun als Rechteckspannung vorliegenden Welligkeitssignal wieder eine sinusförmige Wechselspannung entstehen. Die positiven Halbwellen dieser Wechselspannung, die den einzelnen, durch die Wicklungen S1, S2, S3 und über die jeweils zugeordneten Thyristoren TH2, TH4 und TH6 fließenden Strompulsen zugeordnet sind, werden über die Diode D1 dem Komparator K1 zugeführt und dort mit einer Referenzspannung verglichen, die mittels eines aus Widerständen R2, R3 und R4 bestehenden Spannungsteilers aus einer Hilfsspannung UH erzeugt wird. Übersteigen die positiven Halbwellen die Referenzspannung, so steht am Komparatorausgang eine Rechteckspannung an, deren ansteigende Flanken das nachtriggerbare Zeitglied MF1, dessen Verzögerungszeit z.B. auf 10 ms eingestellt ist, jeweils vor Ablauf dieser Verzögerungszeit triggern. Der Ausgang des Zeitgliedes bleibt deshalb ständig auf hohem Potentialniveau. Fällt jedoch ein Strompuls aus, etwa weil ein Thyristor nicht gezündet hat, so fehlt eine der Triggerflanken und der Ausgang des Zeitgliedes MF1 nimmt niedriges Potential an.

Im zweiten in der Figur dargestellten Kanal der durch die Filter HP2, TP2, die Diode D2, den Komparator K2 und das Zeitglied MF2 gebildet wird, erfolgt die Auswertung des am Sternpunkt der Wicklungen S4, S5 und S6 abgegriffenen Eingangssignals in genau derselben Weise. Auch hier führt der Ausfall eines Strompulses zu niedrigem Potential am Ausgang des Zeitgliedes MF2.

Die Ausgangssignale beider Zeitglieder werden mittels des Nand-Gliedes UG zusammengeführt, so daß an dessen Ausgang ein positiver Spannungsimpuls erscheint, sobald eines der Zeitglieder den Ausfall eines Strompulses anzeigt. Bereits dieser positive Spannungsimpuls könnte zur Auslösung einer Störungsmeldung verwendet werden. In den meisten Fällen jedoch wird der Ausfall eines einzelnen Strompulses eine Störungsmeldung oder gar eine Abschaltung des gesamten Stromrichters nicht rechtfertigen. Man wird deshalb erst nach wiederholtem Ausfall einzelner Strompu se oder bei Ausfall mehrerer aufeinanderfolgender Strompulse eine Störungsmeldung zu erhalten wünschen. Diesem Zweck dient der Zähler Z1. Er zählt die einzelnen Pulsausfälle bis zu einer vorgegebenen Anzahl hoch und gibt dann erst eine Störungsmeldung ab.

In der dargestellten Schaltung ist ein weiteres nachtriggerbares Zeitglied MF3 vorgesehen, dessen Verzögerungszeit z.B. auf das Dreifache der Verzögerungszeit der Zeitglieder MF1 und MF2 eingestellt ist. Dieses Zeitglied ist mit dem Ausgang des Nand-Gliedes verbunden und hat die Aufgabe, den Zähler Z1 über ein Oder-Glied OG im rückgestellten Zustand zu halten, solange kein positiver Spannungsimpuls, der einen Pulsausfall signalisiert, am Ausgang des Nand-Gliedes UG erscheint. Durch die Wirkung dieses weiteren Zeitglieds werden sporadisch auftretende, nicht unmittelbar aufeinanderfolgende Pulsausfälle unterdrückt, da in der Zeit zwischen den auftretenden, die Pulsausfälle anzeigenden positiven Spannungsimpulsen der Zähler Z1 rückgestellt wird.

Über das Oder-Glied OG lassen sich noch zwei weitere Signale einkoppeln, die eine Rückstellung des Zählers Z1 und damit eine vorübergehende Abschaltung der Welligkeitsüberwachung bewirken: Diese Signale werden von den Komparatoren K4 und K5 geliefert und bewirken die Abschaltung der Welligkeitsüberwachung bei zu geringer Ausgangsbelastung des Stromrichters bzw. während einer Anlaufzeit unmittelbar nach Einschalten des Stromrichters.

Dem Komparator K4 wird hierzu an seinem invertierenden Eingang ein Signal zugeführt, welches durch Gleichrichtung der positiven Halbwellen der Wechselspannung am Ausgang der Tiefpaßfilter TP1 und TP2 gewonnen wird und einen umso höheren Pegel aufweist, je größer die Amplituden des Welligkeitssignals mit steigender Belastung des Stromrichters ausfallen. Dieses Signal wird mit einer an dem aus den Widerständen R2, R3 und R4 bestehenden Spannungsteiler gewonnenen Referenzspannung verglichen. Wird die Referenzspannung bei niedriger Strombelastung des Stromrichterausgangs unterschritten, so liefert der Komparator K4 ein Dauersignal, das über das Oder-Glied dem Zähler Z1 als Dauerrückstellsignal zugeführt wird.

Der Komparator K5 wertet die Spannung an einem Kondensator C2 aus, der über einen Widerstand R5 von der Hilfsspannung UH aufgeladen wird. Er vergleicht die Kondensatorspannung mit einer ebenfalls an dem o.g. Spannungsteiler gewonnenen Referenzspannung und blockiert über das Oder-Glied den Zähler Z1, solange die Kondensatorspannung unterhalb der Referenzspannung liegt.

Schließlich enthält die Welligkeitsüberwachungsschaltung noch einen zweiten Zähler Z2, der von einem Taktgeber TG beaufschlagt und von den in einem Inverter JV invertierten, am Ausgang des Nand-Gliedes UG anstehenden Spannungsimpulsen zurückgestellt wird.

Dieser Zähler Z2 ist wie der Zähler Z1 in der Lage, eine Störungsmeldung auszugeben. Er tritt normalerweise nicht in Aktion, da er im störungsfreien Zustand des Stromrichters ständig, bei Auftreten einzelner Pulsausfälle in der Zeit zwischen den vom Nand-Glied UG ausgegebenen positven Spannungsimpulsen ein Rückstellsignal erhält. Nur im Fall des Ausfalles einer ganzen Thyristorgruppe, in dem die positiven Spannungsimpulse am Ausgang des Nand-Gliedes einander überlappen und deshalb dort positive Gleichspannung ansteht, die der Zähler Z1 nicht verarbeiten kann, wird der Zähler Z2 nicht rückgestellt. Er zählt dann mit Hilfe des Taktgebers hoch und gibt die fällige Störungsmeldung anstelle des Zählers Z1 aus.

Sämtliche in der vorbeschriebenen Welligkeitsüberwachungsschaltung von diskreten Bauelementen und Schaltungsteilen wahrzunehmenden Funktionen lassen sich auch mit Hilfe eines entsprechend programmierten Rechners ausführen. Hierzu können dem Rechner z.B. die Ausgangssignale der Eingangsfilter EF1, EF2 zugeführt werden. Komparatorfunktionen, Zeitfunktionen und Zählvorgänge können mittels entsprechender Unterprogramme realisiert werden.

## Patentansprüche

1. Schaltungsanordnung zur Überwachung der Funktion der einzelnen Halbleiterschalter (TH1, ..., TH6) in einem Mehrpuls-Stromrichter, bei dem die einzelnen Pulsstromquellen (S1, ..., S6) jeweils auf einer Seite über die Schaltstrecke eines Halbleiterschalters mit einer Klemme (+) eines gemeinsamen Gleichspannungsausgangs (UA) verbunden, auf der anderen Seite in einem Sternpunkt zusammengeschaltet und über mindestens eine Glättungsdrossel (DR2) mit der anderen Klemme (-) des gemeinsamen Gleichspannungsausgangs verbunden sind,
**dadurch gekennzeichnet,** daß eine Welligkeitsüberwachungsschaltung vorgesehen ist, die die am Sternpunkt gegenüber einem festen Bezugspunkt anstehende Spannung abgreift, das Vorhandensein von den einzelnen Schaltphasen der Halbleiterschalter (TH1, ..., TH6) zugeordneten, periodisch auftretenden Spannungsänderungen prüft und eine Störungsmeldung (SM) abgibt, wenn eine vorgegebene Anzahl solcher zu erwartender Spannungsänderungen ausbleibt.

2. Schaltungsanordnung nach Anspruch 1, dadurch gekennzeichnet, daß die Welligkeitsüberwachungschaltung ein auf die Pulsfolgefrequenz abgestimmtes Eingangsfilter (EF1, EF2) zur Aussiebung von Störfrequenzen, einen Komparator (K1, K2) zur Umformung der Potentialänderungen in Rechteckimpulse und ein nachtriggerbares Zeitglied (MF1, MF2) enthält, daß das nachtriggerbare Zeitglied von einer der Flanken jedes Rechteckimpulses getriggert wird und bei Ausbleiben eines Rechteckimpulses nach einer Zeit, die größer ist als der einfache, jedoch kleiner als der doppelte zeitliche Abstand der triggernden Flanken zweier aufeinanderfolgender Rechteckimpulse an seinem Ausgang ein Pulsfehlersignal abgibt.

3. Schaltungsanordnung nach Anspruch 2, dadurch gekennzeichnet, daß ein Zähler (Z1) und ein zweites nachtriggerbares Zeitglied (MF3) vorgesehen sind, daß das Pulsfehlersignal sowohl dem Zähleingang des Zählers als auch dem Eingang des zweiten nachtriggerbaren Zeitgliedes zugeführt wird, daß der Zähler, sofern er nicht rückgesetzt wird, nach einer vorgegebenen Zahl von Pulsfehlersignalen eine Störungsmeldung abgibt und daß das zweite nachtriggerbare Zeitglied mit seinem Ausgang mit dem Rücksetzeingang des Zählers verbunden ist und diesen rücksetzt, sofern es nicht durch wiederholt empfangene Pulsfehlersignale gesetzt bleibt.

4. Schaltungsanordnung nach einem der vorstehenden Ansprüche, dadurch gekennzeichnet, daß eine Schwellwertschaltung (K4) vorgesehen ist, die die Folge der den einzelnen Schaltphasen der Halbleiterschalter zugeordneten Potentialänderungen am Ausgang des Eingangsfilters (EF1, EF2) abgreift, gleichrichtet, mit einer vorgegebenen Referenzspannung vergleicht und die Ausgabe einer Störungsmeldung verhindert, sobald die aus der Folge der Potentialänderungen gewonnene Gleichspannung unter die Referenzspannung absinkt.

5. Schaltungsanordnung nach einem der vorstehenden Ansprüche, dadurch gekennzeichnet, daß eine weitere Zeitschaltung (R5, C2, K5) vorgesehen ist, die unmittelbar nach Einschalten des Stromrichters für eine vorgegebene Zeit die Ausgabe einer Störungsmeldung verhindert.

6. Schaltungsanordnung nach einem der vorstehenden Ansprüche, dadurch gekennzeichnet, daß die aus Eingangsfilter (EF1, EF2), Komparator (K1, K2) und nachtriggerbarem Zeitglied (MF1, MF2) bestehende Welligkeitsüberwachungsschaltung mehrfach vorhanden und jeweils einem Teil der im Mehrpuls-Stromrichter enthaltenen Pulsstromquellen (S1, S2, S3; S4, S5, S6) zugeordnet ist und daß die Ausgänge der einzelnen nachtriggerbaren Zeitglieder (MF1, MF2) einer NAND-Schaltung (UG) zugeführt werden, an deren Ausgang ein Störungssignal erscheint, wenn von einer der Welligkeitsüberwachungsschaltungen das Fehlen einer der zu erwartenden Spannungsänderungen festgestellt wird.

7. Schaltungsanordnung nach Anspruch 1, dadurch gekennzeichnet, daß die Welligkeitsüberwachungsschaltung zur Auswertung der Welligkeit der am Sternpunkt anstehenden Spannung einen entsprechend programmierten Rechner enthält.

## Claims

1. Circuit for monitoring the operation of the individual semiconductor switches (TH1, ..., TH6) in a polyphase convertor wherein the individual pulse current sources (S1, ..., S6) are in each case connected on one side via the switching path of a semiconductor switch to a terminal (+) of a common d.c. voltage output (UA) and on the other side, connected together in a star point and via at least one smoothing choke (DR2), to the other terminal (-) of the common d.c. output,
**characterized in** that there is provided a ripple monitoring circuit which takes off the voltage appearing at the star point in relation to a fixed reference point, tests the presence of the voltage changes periodically appearing and assigned to the individual switching phases of the semiconductor switches (TH1, ..., TH6) and emits a fault signal (SM) if a predetermined number of such voltage changes which are to be expected fail to occur.

2. Circuit as claimed in Claim 1, characterized in that the ripple monitoring circuit contains an input filter (EF1, EF2) tuned to the pulse repetition frequency for filtering out interfering frequencies, a comparator (K1, K2) for converting the potential changes into square-wave pulses and a retriggerable timing element (MF1, MF2), that the retriggerable timing element is triggered by one of the edges of each square-wave pulse and emits a pulse failure signal at its output in the event of absence of a square-wave pulse after a period which is greater than once the chronological difference but smaller than twice the chronological difference between the triggering edges of two successive square-wave pulses.

3. Circuit as claimed in Claim 2, characterized in that a counter (Z1) and a second retriggerable timing element (MF3) are provided, that the pulse failure signal is passed both to the counting input of the counter and to the input of the second retriggerable timing element, that the counter, provided it is not reset, emits a fault signal after a predetermined number of pulse failure signals and that the second retriggerable timing element is connected with its output to the reset input of the counter and resets this unless it remains set owing to repeatedly received pulse failure signals.

4. Circuit as claimed in any one of the preceding claims, characterized in that there is provided a threshold value circuit (K4) which picks off the sequence of the potential changes assigned to the individual switching phases of the semiconductor switches at the output of the input filter (EF1, EF2), rectifies it and compares it with a predetermined reference voltage and prevents the emitting of a fault signal as soon as the d.c. voltage obtained from the sequence of the potential changes falls below the reference voltage.

5. Circuit as claimed in any one of the preceding claims, characterized in that there is provided a further timing circuit (R5, C2, K5) which prevents the emitting of a fault signal for a predetermined time immediately after the convertor has been switched on.

6. Circuit as claimed in any one of the preceding claims, characterized in that the ripple monitoring circuit consisting of an input filter (EF1, EF2), a comparator (K1, K2) and a retriggerable timing element (MF1, MF2) is present in multiple form and each such circuit is assigned to part of the pulse current sources (S1, S2, S3; S4, S5, S6) contained in the polyphase convertor and that the outputs of the individual retriggerable timing elements (MF1, MF2) are passed to a NAND circuit (UG), at the output of which a fault signal appears if one of the ripple monitoring circuits detects the absence of one of the voltage changes which are to be expected.

7. Circuit as claimed in Claim 1, characterized in that the voltage monitoring circuit for evaluating the ripple of the voltage applied to the star point contains an appropriately programmed computer.

## Revendications

1. Agencement de circuit de surveillance du fonctionnement des différents commutateurs semiconducteurs (TH1, ..., TH6) dans un redresseur d'impulsions multiples, circuit dans le cas duquel les différentes sources de courant pulsatoires (S1, ..., S6) sont chacune réunies, d'un côté, par l'intermédiaire d'un circuit conducteur d'un commutateur semi-conducteur, à une borne (+) d'une sortie commune de tension redressée (UA), et, de l'autre côté, sont regroupées en un point neutre et réunies, par l'intermédiaire d'au moins une bobine de lissage (DR2), avec l'autre borne (-) de la sortie commune de tension redressée,
agencement caractérisé par le fait qu'il est prévu un circuit de surveillance de l'ondulation qui prélève la tension apparaissant au point neutre par rapport à un point de référence fixe, vérifie la présence des modifications de tension survenant périodiquement et correspondant aux différentes phases de circuit des commutateurs semi-conducteurs (TH1, ..., TH6) et émet une annonce d'incident (SM) s'il n'arrive pas un nombre prescrit de ces modifications de tension à attendre.

2. Agencement de circuit selon la revendication 1, caractérisé par le fait que le circuit de surveillance de l'ondulation contient un filtre d'entrée (EF1, EF2), accordé sur la fréquence de la succession d'impulsions, pour éliminer par filtrage les fréquences parasites, un comparateur (K1, K2) pour conformer les modifications de potentiel en impulsions rectangulaires et un élément temporisé (MF1, MF2), réinitialisable, par le fait que l'élément temporisé, réinitialisable, est démarré par l'un des flancs de chaque impulsion rectangulaire et, en cas d'absence d'une impulsion rectangulaire après un intervalle de temps qui est supérieur à l'intervalle de temps qui s'écoule entre les flancs croissants de deux impulsions rectangulaires successives, mais inférieur au double de cet intervalle de temps, émet à sa sortie un signal d'absence d'impulsion.

3. Agencement de circuit selon la revendication 2, caractérisé par le fait que sont prévus un compteur (Z1) et un second élément temporisé (MF3) réinitialisable, par le fait que le signal d'absence d'impulsion est amené aussi bien à l'entrée de comptage du compteur qu'à l'entrée du second élément temporisé réinitialisable, par le fait que le compteur, dans la mesure où il n'est pas réinitialisé, émet, après un nombre prescrit de signaux d'absence d'impulsion, une annonce d'incident, et par le fait que le second élément temporisé réinitialisable, est relié, par sa sortie, à l'entrée de réinitialisation du compteur et réinitialise ce dernier dès lors que des signaux d'absence d'impulsion, reçus de façon répétitive, ne le font pas continuer à compter.

4. Agencement de circuit selon l'une des revendications précédentes, caractérisé par le fait qu'il est prévu un circuit de valeur de seuil (K4) qui prélève, à la sortie du filtre d'entrée (EF1, EF2), la succession des modifications des potentiels correspondant aux différentes phases de circuit des commutateurs semiconducteurs, la redresse, la compare avec une tension de référence prescrite et empêche l'émission d'une annonce d'incident dès que la tension redressée obtenue à partir de la succession des modifications de potentiel s'abaisse en dessous de la tension de référence.

5. Agencement de circuit selon l'une des revendications précédentes, caractérisé par le fait qu'il est prévu un autre circuit temporisé (R5, C2, K5) qui, immédiatement après mise en circuit du redresseur et pendant un temps prescrit, interdit l'émission d'une annonce d'incident.

6. Agencement de circuit selon l'une des revendications précédentes, caractérisé par le fait que le circuit de surveillance de l'ondulation, constitué du filtre d'entrée (EF1, EF2), du comparateur (K1, K2) et de l'élément temporisé réinitialisable (MF1, MF2) existe en plusieurs exemplaires et correspond chaque fois à une partie des sources de courant pulsatoire (S1, S2, S3; S4, S5, S6) contenues dans le redresseur d'impulsions multiples, et par le fait que les signaux de sortie des différents éléments temporisés réinitialisables (MF1, MF2) sont amenés à un circuit NON ET (UG) à la sortie duquel apparait un signal d'incident lorsque l'absence de l'une des modifications de tension à attendre est déterminée par l'un des circuits de surveillance de l'ondulation.

7. Agencement de circuit selon la revendication 1, caractérisé par le fait que le circuit de surveillance de l'ondulation contient, pour traiter l'ondulation de la tension apparaissant au point neutre, un calculateur programmé en conséquence.
